# FASCICULE DE BREVET EUROPEEN

(11) **EP 3 065 853 B1**
(45) Date de publication et mention de la délivrance du brevet: **17.10.2018**
(21) Numéro de dépôt: 14805989.2
(22) Date de dépôt: 27.10.2014
(51) Int. Cl.: B01F 17/48, C09C 3/04, C09C 1/02

(54) **UTILISATION DE CELLULOSES CARBOXYLEES DEPOLYMERISEES POUR LA DISPERSION ET LE BROYAGE DES MATIERES MINERALES**
VERWENDUNG VON DEPOLYMERISIERTEN CARBOXYLIERTEN CELLULOSEN ZUM DISPERGIEREN UND MAHLEN VON MINERALMATERIALIEN
USE OF DEPOLYMERISED CARBOXYLATED CELLULOSES FOR DISPERSING AND GRINDING MINERAL MATERIALS

(30) Priorité: 04.11.2013 FR 1360787
(43) Date de publication de la demande: 14.09.2016
(73) Titulaire: COATEX, 69730 Genay (FR)
(72) Inventeur: CHAMPAGNE, Clémentine, F-69300 Caluire et Cuire (FR); JACQUEMET, Christian, F-69005 France (FR); MONGOIN, Jacques, F-69650 Quincieux (FR); SUAU, Jean-Marc, F-69480 Lucenay (FR)
(74) Mandataire: Balmefrezol, Ludovic Francis Pierre
(86) Numéro de dépôt international: PCT/FR2014/052727
(87) Numéro de publication internationale: WO 2015/063402

(56) Documents cités:
- WO-A1-03/018637
- DE-A1- 10 253 812
- FR-A1- 2 873 046
- US-A1- 2009 229 775

## Description

La présente invention a pour objet l'utilisation de celluloses carboxylées dépolymérisées comme agent dispersant ou agent d'aide au broyage de suspensions aqueuses de matières minérales.
Les suspensions (« slurries » en anglais) de matières minérales sont des suspensions de solides insolubles dans un milieu liquide qui est généralement un mélange d'eau et d'un additif. Les caractéristiques des suspensions, notamment la taille des particules de matière minérale et la nature de l'additif, dépendent de l'utilisation que l'on souhaite faire de ces suspensions. Ces dernières sont, en effet, utilisées comme charge inorganique dans une variété d'applications différentes (e.g. peintures, plastiques, cosmétiques, papier, sauces de couchage papetières).
Il est connu d'utiliser des polymères d'acide acrylique de faible poids moléculaire, totalement ou partiellement neutralisés, comme agent dispersant ou d'aide au broyage de particules minérales en suspension aqueuse. Il est également connu d'utiliser des copolymères de l'acide acrylique comme agent dispersant ou d'aide au broyage.

Un objet de la présente invention est de proposer un agent dispersant ou d'aide au broyage de matières minérales en suspension de nature différente des agents de type polymère ou copolymère d'acide acrylique commercialement disponibles. Plus précisément, la présente invention concerne l'utilisation comme agent d'aide au broyage et à la dispersion des particules minérales en suspension d'une cellulose carboxylée qui a été dépolymérisée pour présenter un poids moléculaire optimal pour la présente application.

Un autre objet de la présente invention est de proposer un agent d'aide au broyage et à la dispersion des particules minérales en suspension d'origine bio-sourcée, c'est-à-dire non issu d'une énergie fossile. Cette démarche s'inscrit dans les concepts de chimie verte et de développement durable.

La cellulose est un polymère linéaire formé d'unités de β-anhydroglucose, également appelées « unité glucose » ou « glucosyl ». Chaque unité d'anhydroglucose contient trois groupes hydroxyles. On prépare une cellulose carboxylée telle que la carboxyméthylcellulose (CMC) en faisant réagir une partie des hydroxyles de la cellulose avec du monochloroacétate de sodium (le sodium étant utilisé en tant qu'exemple représentatif d'un métal alcalin) ou de l'acide monochloroacétique, selon les deux étapes suivantes :

R-OH + NaOH → R-ONa + H₂O R-ONa + Cl-CH₂-COONa → RO-CH₂-COONa + NaCl

La CMC présente alors plusieurs caractéristiques techniques déterminantes. Une de ses caractéristiques est son degré de substitution (DS) ou en d'autres termes, le nombre moyen de groupements carboxyméthyles greffé sur la molécule par unité glucose. Le degré de substitution est également appelé degré de carboxylation. Les produits du commerce peuvent par exemple avoir des DS compris entre environ 0,4 et environ 1,4. Ainsi, à titre indicatif, une CMC commercialement disponible présentant un DS de 0,8 présente en moyenne 0,8 groupe carboxyméthyle greffé par unité glucose, certaines unités glucose ne présentant pas de groupe carboxyméthyle et d'autres unités glucose comportant 1, 2 ou 3 groupes carboxyméthyle. D'autres caractéristiques techniques sont le poids moléculaire (Mw), ainsi que le degré de polymérisation (DP), c'est-à-dire le nombre d'unités glucose par molécule de CMC.
Il est connu de procéder à la dépolymérisation de la CMC, c'est-à-dire à la diminution de son poids moléculaire, au moyen d'un traitement oxydatif.
De nombreux procédés de dépolymérisation de la CMC connus à ce jour durent plusieurs jours et ne permettent pas d'obtenir des solutions à hauts extraits secs. Il est néanmoins intéressant, d'une part de diminuer le temps de dépolymérisation de la CMC et ainsi augmenter la productivité de la CMC dépolymérisée, et d'autre part d'obtenir une solution de CMC dépolymérisée à haut extrait sec et ainsi diminuer les coûts liés à la livraison du produit chez les utilisateurs. En effet, si l'extrait sec est élevé, on transporte plus de matière active et moins d'eau.
Le document EP 0 465 992 (Aqualon Company) décrit un procédé de dépolymérisation de la CMC utilisant du peroxyde d'hydrogène, le procédé étant continu, en batch, ou incrémental.
Néanmoins, ce document ne décrit pas l'utilisation de la CMC pour le broyage ou la dispersion de matières minérales en suspension. Il ne décrit pas non plus l'importance de la sélection du poids moléculaire de la CMC dépolymérisée et de la neutralisation pour l'application broyage ou dispersion des suspensions de matières minérales.

Le document DE 10253812 décrit une suspension aqueuse de pigments à base de fines particules de carbonate de calcium et de sulfate précipité, d'un agent dispersant et d'un additif de fragmentation. L'agent dispersant et l'additif de fragmentation sont des polymères de types polyacrylate, alcool polyvinylique, acide polycarboxylique, polysaccharide ou leurs dérivés ou condensats, ainsi que les acides mono- et / ou di-carboxyliques.

Le document US 2009 229775 concerne une suspension aqueuse d'argile, un polymère associatif hydrophobe et un éventuel tensio-actif utile comme agent anti-déposition de substances contaminantes dans de la pâte à papier.

Le document WO 03 018637 décrit un procédé de dépolymérisation d'éthers de cellulose par décomposition acide oxydante.

Le document FR 2873046 divulgue un procédé de matières minérales dans l'eau, en présence d'épaississants. Les suspensions de matières minérales obtenues sont utilisées dans des formulations de revêtements telles que des peintures aqueuses, des crépis, des encres, des enduits, des mastics, des adhésifs, des colles.

Un objet de la présente invention concerne l'utilisation d'une solution de cellulose carboxylée dépolymérisée pour le broyage et/ou la dispersion de suspensions aqueuses de matière minérale, ladite solution de cellulose carboxylée dépolymérisée présentant un extrait sec compris entre 25 et 40 % en poids par rapport au poids total de la solution, et ladite cellulose carboxylée dépolymérisée présente un poids moléculaire compris entre 10 000 et 40 000 g/mol.

Un autre objet de la présente invention consiste en un agent d'aide au broyage ou agent dispersant de matière minérale, consistant en une solution de cellulose carboxylée dépolymérisée présentant un extrait sec compris entre 25 et 40 % en poids par rapport au poids total de la solution, ladite cellulose carboxylée dépolymérisée présentant un poids moléculaire compris entre 10 000 et 40 000 g/mol.

Par « cellulose carboxylée », on entend une cellulose qui a été modifiée chimiquement et comporte des unités carboxyles, par exemple des unités carboxyméthyl -CH₂-COOH. La cellulose carboxylée est, au moins partiellement, d'origine bio-sourcée. Elle peut être fournie sous forme de poudre ou sous forme de solution, par exemple sous forme de solution aqueuse.

Selon un mode de réalisation de la présente invention, la cellulose carboxylée est la carboxyméthylcellulose.

Selon un mode de réalisation de la présente invention, la cellulose carboxylée dépolymérisée présente un poids moléculaire compris entre 13 000 et 35 000 g/mol, par exemple entre 13 000 et 25 000 g/mol.

Selon un mode de réalisation de la présente invention, ladite cellulose carboxylée dépolymérisée présente un indice de polydispersité IP compris entre 2 et 10, par exemple compris entre 3 et 5.

L'indice de polydispersité IP correspond à la distribution des poids moléculaires des différentes macromolécules au sein de la cellulose obtenue. Si toutes les macromolécules présentent un même poids moléculaire, l'indice IP diminue et se rapproche de la valeur théorique de 1. Si par contre, les macromolécules présentent des poids moléculaires différents, l'indice IP augmente.

Dans le cadre de la présente invention, l'indice IP de la cellulose carboxylée dépolymérisée est compris entre 2 et 10, par exemple entre 3 et 5.
Selon un mode de réalisation de la présente invention, la solution de cellulose carboxylée dépolymérisée présente un extrait sec compris supérieur à 30 %, par exemple entre 30 et 40 % en poids par rapport au poids total de la solution, par exemple entre 31 et 35 % en poids.

Cet extrait sec peut être considéré comme élevé dans le présent domaine technique. Ceci présente de nombreux avantages en termes de productivité, de transport et de mise en oeuvre. Notamment, aucune étape de concentration de la solution n'est nécessaire avant transport ou utilisation.

Selon un mode de réalisation de la présente invention, ladite solution de cellulose carboxylée dépolymérisée est obtenue selon un procédé comprenant :
1) une étape de dépolymérisation selon laquelle :
   la) on dispose d'une cellulose carboxylée à dépolymériser, présentant un degré de substitution compris entre 0,2 et 2,
   1b) on chauffe un réacteur contenant de l'eau à une température comprise entre 50 et 85°C (bornes incluses), par exemple à une température comprise entre 75 et 85°C (bornes incluses),
   1c) on ajoute dans le réacteur de manière progressive et simultanée la cellulose carboxylée à dépolymériser et un peroxyde en maintenant la température selon 1b),
   1d) après ajout de la totalité des réactifs selon 1c), on maintient la température du mélange selon 1b) jusqu'à la consommation totale du peroxyde,
2) une étape de refroidissement du mélange à une température inférieure à 75°C, par exemple à une température inférieure à 70°C,
3) éventuellement une étape de neutralisation du mélange.

Par « cellulose carboxylée à dépolymériser », on entend une cellulose carboxylée de haut poids moléculaire, comparativement au poids moléculaire de la cellulose carboxylée dépolymérisée utilisée pour le broyage et/ou la dispersion de matière minérale.
Selon un mode de réalisation de la présente invention, la cellulose carboxylée à dépolymériser présente un poids moléculaire supérieur à 40 000 g/mol, par exemple compris entre 200 000 et 300 000 g/mol, par exemple compris entre 220 000 et 280 000 g/mol.

Le procédé décrit ci-dessus, de type continu ou incrémental, permet d'obtenir une cellulose carboxylée à haut extrait sec. Cela conduit à obtenir une cellulose carboxylée dépolymérisée qui présente par ailleurs un indice IP compris entre 2 et 10, par exemple entre 3 et 5. Ce procédé de dépolymérisation en continu est avantageux par rapport à un procédé de type batch, qui nécessite de mettre en oeuvre une étape préliminaire de solubilisation de la cellulose. Cette étape préliminaire consiste à dissoudre une quantité déterminée de cellulose en poudre sous agitation. Cette étape préliminaire peut être longue, par exemple supérieure à 10 heures, pour obtenir une solution de cellulose à dépolymériser à 10 % d'extrait sec.

Selon un mode de réalisation de la présente invention, la cellulose carboxylée à dépolymériser présente un degré de substitution compris entre 0,7 et 2, par exemple entre 0,5 et 1,8 ou entre 0,6 et 1,4.

Ledit procédé de dépolymérisation de la cellulose carboxylée comprend éventuellement une étape additionnelle qui consiste à ajouter dans ledit réacteur contenant de l'eau au moins un autre agent, par exemple un catalyseur, un sel métallique ou un agent réducteur. Par exemple, cet autre agent peut être choisi parmi le sulfate ferreux, l'hypophosphite de sodium, le phtalocyanine de fer ou le tungstate de sodium.

Selon un mode de réalisation de la présente invention, ledit peroxyde est le peroxyde d'hydrogène.

Selon un autre mode de réalisation, ledit peroxyde est du peroxyde d'hydrogène et est utilisé en une quantité massique de 20 à 50 % en poids par rapport à la quantité de la cellulose carboxylée totale introduite dans le réacteur au cours du procédé.

Selon un mode de réalisation de la présente invention, ledit procédé de préparation de la solution de cellulose carboxylée dépolymérisée comprend une étape de neutralisation totale ou partielle au moyen d'un ou plusieurs agents de neutralisation choisis dans le groupe consistant en les hydroxydes de sodium, les hydroxydes de calcium, les hydroxydes de magnésium, les hydroxydes de potassium et les amines.

Selon un autre mode de réalisation de la présente invention, ledit procédé de préparation de la solution de cellulose carboxylée dépolymérisée comprend une étape de neutralisation totale ou partielle au moyen de solutions de NaOH et de Ca(OH)₂.

Selon un mode de réalisation de la présente invention, ledit procédé de préparation de la solution de cellulose carboxylée dépolymérisée consiste en une étape de dépolymérisation, une étape de refroidissement et une étape de neutralisation. Selon ce mode de réalisation, ledit procédé de préparation ne comprend pas d'étape préalable de solubilisation de la cellulose carboxylée. Selon un autre mode de réalisation, ledit procédé ne comprend pas d'étape consistant à concentrer la cellulose carboxylée dépolymérisée ainsi obtenue.

La solution de cellulose carboxylée dépolymérisée selon la présente invention est utilisée pour broyer et/ou disperser une matière minérale en suspension aqueuse.

Selon un mode de réalisation de la présente invention, ladite matière minérale est choisie dans le groupe consistant en le carbonate de calcium naturel, le carbonate de calcium synthétique, les dolomies, le kaolin, le talc, le gypse, la chaux, la magnésie, le dioxyde de titane, le blanc satin, le trioxyde d'aluminium, le trihydroxyde d'aluminium, les silices, le mica et leur mélange.

Selon un autre mode de réalisation, ladite matière minérale est le carbonate de calcium. Aux fins de la présente invention, le terme « carbonate de calcium » fait référence à une substance qui comprend au moins 80 % en poids de carbonate de calcium. Le terme « carbonate de calcium » comprend le carbonate de calcium broyé (GCC), c'est-à-dire un carbonate de calcium obtenu à partir de sources naturelles, telles que le calcaire, le marbre, la calcite ou la chaux, ainsi que le carbonate de calcium précipité (PCC), c'est-à-dire une substance synthétisée, généralement obtenue par précipitation suite à une réaction de dioxyde de carbone et d'hydroxyde de calcium (chaux hydratée) dans un environnement aqueux ou par précipitation d'une source de calcium et de carbonate dans de l'eau. De plus, le carbonate de calcium précipité peut également être le produit d'une introduction de sels de calcium et de carbonate, de chlorure de calcium et de carbonate de sodium par exemple, dans un environnement aqueux. Le PCC peut être la vatérite, la calcite ou l'aragonite.

Selon un autre mode de réalisation, la suspension aqueuse selon la présente invention se compose d'eau, d'une matière minérale telle que définie ci-dessus, par exemple le carbonate de calcium, et d'une cellulose carboxylée dépolymérisée selon la présente invention. Selon ce mode de réalisation, la suspension aqueuse ne comprend aucun additif autre que la cellulose carboxylée dépolymérisée décrite dans la présente demande, c'est-à-dire qu'elle ne comprend pas, par exemple, un autre polymère ou dispersant.

Selon un mode de réalisation de la présente invention, ladite solution de cellulose carboxylée dépolymérisée est présente dans la suspension aqueuse de matière minérale en une quantité en l'état de 0,01 à 8 % en poids, sur la base poids total des solides dans la suspension, par exemple de 0,1 à 5 % en poids.

Selon un autre mode de réalisation de la présente invention, ladite solution de cellulose carboxylée dépolymérisée est présente dans la suspension aqueuse de matière minérale en une quantité de 0,01 à 3 % en poids sec, sur la base poids total des solides dans la suspension, par exemple de 0,1 à 1,5 % en poids sec.

La cellulose carboxylée dépolymérisée selon la présente invention est utilisée pour la dispersion et/ou le broyage d'une matière minérale, par exemple le carbonate de calcium.

La « dispersion » consiste en la préparation, sous agitation, d'une suspension de matière minérale, par exemple de carbonate de calcium. Plus précisément, elle peut en particulier consister en l'introduction de tout ou d'une partie de la cellulose carboxylée dépolymérisée selon l'invention dans la phase aqueuse (c'est-à-dire l'eau), puis le carbonate de calcium, de sorte à obtenir une suspension aqueuse ayant une teneur en carbonate de calcium déterminée. En d'autres termes, l'étape de dispersion peut consister en le mélange de la cellulose carboxylée dépolymérisée avec de l'eau, puis le mélange du carbonate de calcium avec la solution de cellulose carboxylée dépolymérisée. En variante, elle peut consister en l'introduction de tout ou d'une partie du carbonate de calcium dans la phase aqueuse (c'est-à-dire le l'eau), puis de la cellulose carboxylée dépolymérisée selon l'invention. Dans ce cas, l'étape de dispersion consiste en le mélange du composant de carbonate de calcium avec de l'eau, puis le mélange de la cellulose carboxylée dépolymérisée avec la suspension de carbonate de calcium.

L'étape de dispersion peut être réalisée dans un mixeur ou dans n'importe quel autre équipement qui a la capacité de mélanger de manière homogène ou d'homogénéiser les composants de la suspension. L'homme du métier va s'adapter à ces conditions de mélange et/ou d'homogénéisation, telles que la vitesse de mélange et la température selon l'équipement du procédé disponible.

Le terme « broyage » signifie que les particules minérales sont divisées en particules plus petites. L'étape de broyage peut se produire dans un broyeur ou dans n'importe quel autre équipement qui a la capacité de diviser les particules de carbonate de calcium en particules plus petites.

L'étape de dispersion et l'étape de mélange peuvent être réalisées à température ambiante, c'est-à-dire à 20°C ou à d'autres températures, par exemple à des températures variant entre 5 et 140°C. Un chauffage peut être introduit par cisaillement interne ou par une source externe ou une combinaison des deux.

La suspension aqueuse de matière minérale, par exemple de carbonate de calcium, peut être obtenue par un procédé comprenant 1/ une étape de dispersion et 2/ une étape de broyage. En variante, la suspension aqueuse de matière minérale, par exemple de carbonate de calcium, peut être obtenue par un procédé comprenant 1/ une étape de broyage et 2/ une étape de dispersion. Selon un autre procédé, la suspension aqueuse de matière minérale, par exemple de carbonate de calcium, peut être obtenue par un procédé comprenant 1/ une étape de broyage jusqu'à une teneur en solides déterminée SC1 et une distribution granulométrique déterminée PSD1, 2/ une étape de dispersion et 3/ une étape de broyage jusqu'à une teneur en solides déterminée SC2 et une distribution granulométrique déterminée PSD2. Selon un autre procédé, l'étape de dispersion et l'étape de mélange peuvent être réalisées en même temps.

Le procédé de préparation d'une suspension aqueuse de matière minérale, par exemple de carbonate de calcium, peut également comprendre une étape de concentration. Le terme « concentration » signifie la réduction de la teneur en eau de la suspension, de sorte à ajuster la teneur en solides de la suspension aqueuse. L'étape de concentration peut être réalisée par les procédés connus de l'homme du métier. Elle peut en particulier être réalisée par un moyen thermique, par exemple au moyen d'un évaporateur ou de n'importe quel autre équipement d'évaporation adapté.

La suspension aqueuse de matière minérale, par exemple de carbonate de calcium, peut être séchée par n'importe quel procédé approprié connu de l'art. Elle peut en particulier être séchée de manière thermique, par exemple au moyen d'un sèche-cheveux, ou elle peut être séchée de manière mécanique, par exemple au moyen de filtres.

Selon un mode de réalisation, la présente invention concerne l'utilisation d'une cellulose carboxylée dépolymérisée pour le broyage et/ou la dispersion de suspensions aqueuses de matière minérale, par exemple le carbonate de calcium, ayant une distribution granulométrique telle qu'au moins 60 % en poids des particules de matière minérale ont un diamètre équivalent inférieur ou égal à 2 µm, par exemple environ 60 %, environ 75 % ou environ 90 % en poids des particules ont un diamètre équivalent inférieur ou égal à 2 µm.

Selon un mode de réalisation de la présente invention, ladite suspension aqueuse présente une viscosité Brookfield inférieure à 1 000 mPa.s, telle que mesurée juste après broyage avec un viscosimètre de type Brookfield DVIII à 25°C à une vitesse de 100 t/min.
Selon ce mode de réalisation, ladite suspension est suffisamment fluide pour être manipulée sans difficultés.

Selon un mode de réalisation de la présente invention, ladite suspension aqueuse étant destinée à une formulation de peinture, une formulation plastique, une formulation détergente, une formulation cosmétique, une formulation de papier ou une sauce de couchage papetière.

Selon un autre mode de réalisation, la présente invention concerne l'utilisation d'une solution de cellulose carboxylée, par exemple carboxyméthylcellulose, dépolymérisée pour le broyage et/ou la dispersion de suspensions aqueuses de matière minérale, par exemple le carbonate de calcium, ladite solution de cellulose carboxylée dépolymérisée présentant un extrait sec compris entre 30 et 40 % en poids par rapport au poids total de la solution, par exemple compris entre 31 et 35 % en poids, ladite cellulose carboxylée dépolymérisée présentant un poids moléculaire compris entre 13 000 et 35 000 g/mol, par exemple entre 13 000 et 25 000 g/mol et un indice IP compris entre 3 et 10, par exemple compris entre 3 et 5.

Selon ce mode de réalisation, une telle solution de cellulose carboxylée peut être obtenue par un procédé comprenant :
1) une étape de dépolymérisation selon laquelle :
   1a) on dispose d'une cellulose carboxylée à dépolymériser, de poids moléculaire supérieur à 40 000 g/mol, par exemple compris entre 200 000 et 300 000 g/mol, par exemple compris entre 220 000 et 280 000 g/mol, et présentant un degré de substitution compris entre 0,2 et 2, par exemple entre 0,7 et 2,
   1b) on chauffe un réacteur contenant de l'eau, et éventuellement un catalyseur, un sel métallique ou un agent réducteur, à une température comprise entre 50 et 85°C (bornes incluses), par exemple à une température comprise entre 75 et 85°C (bornes incluses),
   1c) on ajoute dans le réacteur de manière progressive et simultanée la cellulose carboxylée à dépolymériser et un peroxyde, par exemple le peroxyde d'hydrogène, en maintenant la température selon 1b),
   1d) après ajout de la totalité des réactifs selon 1c), on maintient la température du mélange selon 1b) jusqu'à la consommation totale du peroxyde,
2) une étape de refroidissement du mélange à une température inférieure à 75°C, par exemple à une température inférieure à 70°C, et
3) une étape de neutralisation du mélange, par exemple avec de l'hydroxyde de sodium.

Les exemples qui suivent permettent de mieux appréhender la présente invention, sans en limiter la portée.

### EXEMPLES

### Exemple 1

Cet exemple illustre un procédé de préparation d'une solution de carboxyméthylcellulose (CMC) dépolymérisée selon l'invention ou hors invention, ainsi que les caractéristiques (viscosité, extrait sec, Mw, IP) des solutions ainsi obtenues.

### CMC1 (selon l'invention)

### Etape de dépolymérisation

Dans un réacteur d'un litre, on introduit 800 g d'eau bi-permutée et 0,017 g de catalyseur FeSO₄.7H₂O. On chauffe le réacteur à 80 ± 2°C. Puis on injecte pendant 2h45 une solution de peroxyde d'hydrogène à 35 % massique à 189 mg/min, ainsi que de la CMC (Sigma-Aldrich de référence 419281, Mw = 250 000 g/mol, DS=1,2) par aliquotes de 25 g toutes les 15 minutes (procédé en continu). On laisse la réaction se poursuivre durant 2h30 après la fin des injections. On vérifie que la totalité du peroxyde d'hydrogène a été consommé.

### Etape de refroidissement

Le réacteur est refroidi à 70°C. Le pH tel que mesuré dans le réacteur est de 4,4.

### Etape de neutralisation

On introduit une solution de NaOH 50 % de manière à atteindre un pH de 7,4.

### CMC2 (hors invention)

Le procédé se décompose en une étape préliminaire de solubilisation de la CMC ainsi que trois étapes subséquentes de réaction.

Selon ce procédé en batch, on introduit la totalité de la CMC dans le réacteur sous forme liquide avant l'ajout de peroxyde.

### Etape de préparation de la solution de CMC

Dans un bêcher, on introduit 850 g d'eau bi-permutée puis on introduit progressivement et sous agitation 74,4 g de CMC (Sigma-Aldrich de référence 419281, Mw = 250 000 g/mol, DS=1,2).

### Etape de dépolymérisation

On transfert 870 g de la solution de CMC liquide dans un réacteur que l'on chauffe à 80 ± 2°C. Puis on démarre l'injection d'une solution de peroxyde d'hydrogène à 35 % massique. On injecte ensuite de manière itérative 0,78 g de peroxyde d'hydrogène à 35 % massique toutes les 2 heures, ce pendant 8 heures. On laisse la réaction se poursuivre après la fin des injections jusqu'à consommation totale du peroxyde d'hydrogène.

On vérifie que le peroxyde d'hydrogène a été consommé par un test à l'oxysulfate de titane (IV)-acide sulfurique (Sigma-Aldrich référence 89532).

### Etape de refroidissement

Le réacteur est refroidi à 70°C. Le pH tel que mesuré dans le réacteur est de 5,4.

### Etape de neutralisation

On introduit une solution de NaOH 50 % et/ou de CaOH 10 % de manière à atteindre un pH de 7,8.

### Caractérisation de la solution de CMC dépolymérisée obtenue

### Viscosité Brookfield

On mesure la viscosité dans le réacteur au début du procédé (temps t₀) puis celle de la solution de CMC obtenue, à l'aide d'un viscosimètre Brookfield, modèle RVT, à 10 rpm à l'aide du module approprié.

### Poids moléculaire (Mw) et indice IP

Le poids moléculaire de la CMC est déterminé par chromatographie d'exclusion stérique (CES) ou en anglais « Gel Permeation Chromatography » (GPC).
Une telle technique met en oeuvre un appareil de chromatographie liquide de marque WATERS™ doté d'un détecteur. Ce détecteur est un détecteur de concentration réfractométrique de marque WATERS™.
Cet appareillage de chromatographie liquide est doté d'une colonne d'exclusion stérique convenablement choisie par l'homme du métier afin de séparer les différents poids moléculaires des CMC étudiés. La phase liquide d'élution est une phase aqueuse ajustée à pH 9,00 par de la soude 1N contenant 0,05M de NaHCO₃, 0,1M de NaNO₃, 0,02M de triétanolamine et 0,03 % de NaN₃.
De manière détaillée, selon une première étape, on dilue à 0,9 % sec la solution de CMC dans le solvant de solubilisation de la CES, qui correspond à la phase liquide d'élution de la CES à laquelle est ajoutée 0,04 % de diméthylformamide qui joue le rôle de marqueur de débit ou étalon interne. Puis on filtre à 0,2 µm. 100 µL sont ensuite injectés dans l'appareil de chromatographie (éluant : une phase aqueuse ajustée à pH 9,00 par de la soude 1N contenant 0,05M de NaHCO₃, 0,1M de NaNO₃, 0,02M de triétanolamine et 0,03 % de NaN₃).
L'appareil de chromatographie liquide contient une pompe isocratique (WATERS™ 515) dont le débit est réglé à 0,8 ml/min. L'appareil de chromatographie comprend également un four qui lui-même comprend en série le système de colonnes suivant : une précolonne de type GUARD COLUMN ULTRAHYDROGEL WATERS™ de 6 cm de long et 40 mm de diamètre intérieur, et une colonne linéaire de type ULTRAHYDROGEL WATERS™ de 30 cm de long et 7,8 mm de diamètre intérieur. Le système de détection quant à lui se compose d'un détecteur réfractométrique de type RI WATERS™ 410. Le four est porté à la température de 60°C, et le réfractomètre est porté à la température de 45°C.

L'appareil de chromatographie est étalonné par des étalons de polyacrylate de sodium en poudre de différentes masses moléculaires certifiées pour le fournisseur : POLYMER STANDARD SERVICE ou AMERICAN POLYMER STANDARDS CORPORATION.

L'indice de polydispersité IP de la cellulose obtenue est le rapport de la masse moléculaire moyenne Mw sur la masse moléculaire en nombre Mn.

Les résultats de la caractérisation de la solution de CMC dépolymérisée obtenue sont consignés dans le tableau 1 ci-dessous :

**Tableau 1**

| | CMC1 | CMC2 |
|---|---|---|
| V_{B} à t₀ (mPa.s) | = eau | 18 500 |
| V_{B} de la solution de CMC dépolymérisée obtenue (mPa.s) | 725 | 25 |
| ES (% en poids) | 33,9 | 8 |
| Durée totale procédé | 4h45 | > 20h |
| Mw (g/mol) | 13 310 | 14 085 |

En ce qui concerne le procédé de préparation de la CMC1 dépolymérisée, on note que la viscosité dans le réacteur à t0 est celle de l'eau, ce qui rend le procédé de préparation de la CMC1 plus facile à mettre en oeuvre. Ce procédé permet par ailleurs d'obtenir une solution de CMC dépolymérisée à extrait sec élevé (33,9 %) ce qui présente de nombreux avantages pour son utilisation comme agent d'aide au broyage ou agent dispersant de matière minérale.
De plus, le temps de préparation de la CMC1 dépolymérisée est court (4h45), par rapport à des procédés en batch (CMC2) qui peuvent durer plusieurs jours pour atteindre un extrait sec inférieur. Le produit final de cette transformation est une solution liquide peu visqueuse (725 mPa.s).

### Exemple 2

Cet exemple illustre les performances de broyage de différentes solutions de carboxyméthylcellulose qui ont été dépolymérisées au moyen d'un procédé selon l'exemple 1. Les CMC dépolymérisées différent les unes des autres par leur poids moléculaires notamment (voir Tableau 2). Les CMC dépolymérisées exemplifiées ci-après ont été neutralisées au moyen d'une solution de NaOH 50 % ou d'une suspension de Ca(OH)₂ 10%.

L'efficacité de broyage se mesure par la quantité de matière minérale susceptible d'être broyée dans l'eau et le temps de broyage nécessaire, sans pour autant que la viscosité de la suspension fabriquée rende cette dernière impossible à manipuler, à transporter ou à pomper.

Diverses suspensions aqueuses de carbonate de calcium broyé (GCC), ayant chacune une teneur en solides de 75 ± 1 %, sont préparées en présence de 0,35 % en poids sec d'une solution de CMC dépolymérisée (en tant qu'agent d'aide au broyage), sur la base de la quantité totale des solides dans la suspension.

Le carbonate de calcium utilisé est le carbonate de calcium broyé, marbre d'origine italienne.

Les suspensions de carbonate de calcium grossier sont introduites dans un broyeur DYNO MILL type KDL pilote 1,4 L contenant 2 500 g de billes en verac (Ø 0,6 - 1 mm). Les broyages sont réalisés de manière à obtenir une suspension aqueuse à 75 % de concentration dont 60 % de particules ont un diamètre sphérique équivalent inférieur à 2 microns.

L'efficacité de broyage des solutions de CMC dépolymérisées (essais 2-2 à 2-13) est comparée à celle d'un polymère d'acide polyacrylique de poids moléculaire 5 700 g/mol et totalement neutralisé au sodium commercialisé par Coatex (essai 2-1), testé dans les mêmes conditions à 0,26 % en poids sec sur la base de la quantité totale des solides dans la suspension.
Les suspensions obtenues sont caractérisées. L'ensemble des résultats figure dans le tableau 2 ci-dessous.

La viscosité (exprimée en mPa.s) de chaque suspension est mesurée à 25°C avec un viscosimètre de type Brookfield DVIII. Les valeurs de viscosités indiquées sont mesurées juste après broyage à une vitesse de 100 t/min.

**Tableau 2**

| **Test** | | **Mw (g/mol)** | **Indice IP** | **Neutralisation** | **pH** | **ES (% en poids)** | **Temps de broyage (min)** | **VB après broyage 100 t/min (mPa.s)** |
|---|---|---|---|---|---|---|---|---|
| 2-1 | AANT | 5 500 | 2,6 | Na | 8,5 | 41,0 | 20 | 451 |
| 2-2 | HINV | 2 180 | 2,2 | Na | 8,6 | 30,1 | 10 | Trop visqueux |
| 2-3 | HINV | 3 685 | 3,6 | Na | 7,4 | 29,9 | 7 | Trop visqueux |
| 2-4 | HINV | 6 020 | 4 | Na | 7,4 | 32,0 | 17 | Trop visqueux |
| 2-5 | HINV | 9 760 | 4,4 | Na | 8,0 | 32,7 | 17 | Trop visqueux |
| 2-6 | INV | 10 070 | 3,9 | Na | 9,8 | 33,4 | 17 | 832 |
| 2-7 | INV | 11 025 | 3,9 | Na | 8,6 | 32,7 | 18 | 658 |
| 2-8 | INV | 13 217 | 4,0 | Ca/Na | 8,3 | 32,3 | 10 | 588 |
| 2-9 | INV | 18 800 | 4,2 | Na | 9,8 | 33,8 | 16 | 454 |
| 2-10 | INV | 23 010 | 4,2 | Na | 10,2 | 33,3 | 18 | 284 |
| 2-11 | INV | 29 695 | 4,4 | Na | 9,4 | 33,4 | 18 | 504 |
| 2-12 | INV | 34 520 | 4,4 | Na | | 32,8 | 16 | 555 |
| 2-13 | HINV | 49 085 | 4,1 | Na | 10,6 | 3,0 | - | Trop visqueux |

| | | | | | | | | |
|---|---|---|---|---|---|---|---|---|
| *Na : neutralisation au moyen d'une solution de NaOH 50 %* *Ca*/*Na: neutralisation 10*/*90 au moyen d'une suspension de Ca(OH)₂ 10 % et d'une solution de NaOH 50 %* | | | | | | | | |

D'après les résultats présentés dans le tableau 2, il apparait clairement qu'il est indispensable d'ajuster le poids moléculaire de la CMC pour l'application broyage.

Une étude de stabilité des suspensions est menée après un stockage de 8 jours à 25°C. Les valeurs de viscosité sont mesurées avant et après agitation (au moyen d'un équipement du type Rayneri par exemple).

L'ensemble des suspensions préparées à l'aide d'une CMC dépolymérisée selon l'invention présente une viscosité Brookfield 100 t/min (avant ou après agitation) permettant sa manipulation dans des procédés industriels.

## Revendications

1. Utilisation d'une solution de cellulose carboxylée dépolymérisée pour le broyage et/ou la dispersion de suspensions aqueuses de matière minérale, ladite solution de cellulose carboxylée dépolymérisée présentant un extrait sec compris entre 25 et 40 % en poids par rapport au poids total de la solution, et ladite cellulose carboxylée dépolymérisée présentant un poids moléculaire compris entre 10 000 et 40 000 g/mol.

2. Utilisation selon la revendication 1, selon laquelle ladite cellulose carboxylée est la carboxyméthylcellulose.

3. Utilisation selon la revendication 1, selon laquelle ladite cellulose carboxylée dépolymérisée présente un indice de polydispersité IP compris entre 2 et 10.

4. Utilisation selon l'une des revendications précédentes, selon laquelle ladite cellulose carboxylée dépolymérisée est partiellement ou totalement neutralisée au moyen d'un ou plusieurs agents de neutralisation choisis dans le groupe consistant en les hydroxydes de sodium, les hydroxydes de calcium, les hydroxydes de magnésium, les hydroxydes de potassium et les amines.

5. Utilisation selon l'une des revendications précédentes, selon laquelle ladite solution de cellulose carboxylée dépolymérisée est obtenue selon un procédé comprenant :
1) une étape de dépolymérisation selon laquelle :
la) on dispose d'une cellulose carboxylée à dépolymériser, présentant un degré de substitution compris entre 0,2 et 2,
1b) on chauffe un réacteur contenant de l'eau à une température comprise entre 50 et 85°C (bornes incluses),
1c) on ajoute dans le réacteur de manière progressive et simultanée la cellulose carboxylée à dépolymériser et un peroxyde en maintenant la température selon 1b),
1d) après ajout de la totalité des réactifs selon 1c) on maintient la température du mélange selon 1b) jusqu'à la consommation totale du peroxyde,
2) une étape de refroidissement du mélange à une température inférieure à 75°C, par exemple à une température inférieure à 70°C,
3) éventuellement une étape de neutralisation du mélange.

6. Utilisation selon l'une des revendications précédentes, selon laquelle ladite matière minérale est choisie dans le groupe consistant en le carbonate de calcium naturel, le carbonate de calcium synthétique, les dolomies, le kaolin, le talc, le gypse, la chaux, la magnésie, le dioxyde de titane, le blanc satin, le trioxyde d'aluminium, le trihydroxyde d'aluminium, les silices, le mica et leur mélange.

7. Utilisation selon l'une des revendications précédentes, selon laquelle ladite solution de cellulose dépolymérisée est présente dans la suspension aqueuse de matière minérale en une quantité de 0,01 à 8 % en poids, sur la base poids total des solides dans la suspension.

8. Utilisation selon l'une des revendications précédentes, pour le broyage et/ou la dispersion de suspensions aqueuses de carbonate de calcium ayant une distribution granulométrique telle qu'au moins 60 % en poids des particules ont un diamètre équivalent inférieur ou égal à 2 µm.

9. Utilisation selon l'une des revendications précédentes, selon laquelle ladite suspension aqueuse présente une viscosité Brookfield inférieure à 1 000 mPa.s, telle que mesurée juste après broyage avec un viscosimètre de type Brookfield DVIII à 25°C à une vitesse de 100 t/min.

10. Utilisation selon l'une des revendications précédentes, selon laquelle ladite suspension aqueuse étant destinée à une formulation de peinture, une formulation plastique, une formulation détergente, une formulation cosmétique, une formulation de papier ou une sauce de couchage papetière.

11. Agent d'aide au broyage ou agent dispersant de matière minérale, consistant en une solution de cellulose carboxylée dépolymérisée présentant un extrait sec compris entre 25 et 40 % en poids par rapport au poids total de la solution, ladite cellulose carboxylée dépolymérisée présentant un poids moléculaire compris entre 10 000 et 40 000 g/mol.

## Patentansprüche

1. Verwendung einer depolymerisierten carboxylierten Celluloselösung zum Mahlen und/oder Dispergieren von wässrigen Suspensionen von Mineralmaterial, wobei die depolymerisierte carboxylierte Celluloselösung einen Feststoffgehalt zwischen 25 und 40 Gew.%, bezogen auf das Gesamtgewicht der Lösung, aufweist und die depolymerisierte carboxylierte Cellulose ein Molekulargewicht zwischen 10.000 und 40.000 g/mol aufweist.

2. Verwendung nach Anspruch 1, wobei die carboxylierte Cellulose Carboxymethylcellulose ist.

3. Verwendung nach Anspruch 1, wobei die depolymerisierte carboxylierte Cellulose einen Polydispersitätsindex IP zwischen 2 und 10 aufweist.

4. Verwendung nach einem der vorhergehenden Ansprüche, wobei die depolymerisierte carboxylierte Cellulose mittels eines oder mehrerer Neutralisierungsmittel, ausgewählt aus der Gruppe bestehend aus Natriumhydroxiden, Calciumhydroxiden, Magnesiumhydroxiden, Kaliumhydroxiden und Aminen teilweise oder vollständig neutralisiert wird.

5. Verwendung nach einem der vorhergehenden Ansprüche, wobei die depolymerisierte carboxylierte Celluloselösung durch ein Verfahren erhalten wird, umfassend:
1) einen Depolymerisationsschritt, wobei:
1a) eine zu depolymerisierende carboxylierte Cellulose bereitgestellt wird, die einen Substitutionsgrad zwischen 0,2 und 2 aufweist,
1b) ein Reaktor, der Wasser enthält, auf eine Temperatur zwischen 50 und 85 °C (Grenzwerte eingeschlossen) erhitzt wird,
1c) die zu depolymerisierende carboxylierte Cellulose und ein Peroxid schrittweise und gleichzeitig unter Aufrechterhaltung der Temperatur gemäß 1b) dem Reaktor hinzugefügt werden,
1d) nach Hinzufügen aller Reagenzien gemäß 1c) die Temperatur der Mischung gemäß 1b) bis zum Gesamtverbrauch des Peroxids aufrechterhalten wird,
2) einen Schritt des Abkühlens der Mischung auf eine Temperatur unter 75 °C, beispielsweise auf eine Temperatur unter 70 °C,
3) eventuell einen Neutralisationsschritt der Mischung.

6. Verwendung nach einem der vorhergehenden Ansprüche, wobei das Mineralmaterial ausgewählt ist aus der Gruppe bestehend aus natürlichem Calciumcarbonat, synthetischem Calciumcarbonat, Dolomit, Kaolin, Talk, Gips, Kalk, Magnesiumoxid, Titandioxid, Satinweiß, Aluminiumtrioxid, Aluminiumtrihydroxid, Kieselsäuren, Glimmer und deren Mischung.

7. Verwendung nach einem der vorhergehenden Ansprüche, wobei die depolymerisierte Celluloselösung in der wässrigen Suspension von Mineralmaterial in einer Menge von 0,01 bis 8 Gew.%, bezogen auf das Gesamtgewicht der Feststoffe in der Suspension, vorliegt.

8. Verwendung nach einem der vorhergehenden Ansprüche zum Mahlen und/oder Dispergieren von wässrigen Suspensionen von Calciumcarbonat mit einer derartigen Teilchengrößenverteilung, dass mindestens 60 Gew.% der Teilchen einen äquivalenten Durchmesser aufweisen, der kleiner als oder gleich 2 µm ist.

9. Verwendung nach einem der vorhergehenden Ansprüche, wobei die wässrige Suspension eine Brookfield-Viskosität von weniger als 1.000 mPa.s, gemessen unmittelbar nach Mahlen mit einem Brookfield-DVIII-Viskosimeter bei 25 °C mit einer Geschwindigkeit von 100 U/Minute, aufweist.

10. Verwendung nach einem der vorhergehenden Ansprüche, wobei die wässrige Suspension für eine Farbformulierung, eine Kunststoffformulierung, eine Waschmittelformulierung, eine kosmetische Formulierung, eine Papierformulierung oder eine Papierstreichmasse bestimmt ist.

11. Mahlhilfsmittel oder Dispergiermittel aus Mineralmaterial, bestehend aus einer depolymerisierten carboxylierten Celluloselösung, die einen Feststoffgehalt zwischen 25 und 40 Gew.%, bezogen auf das Gesamtgewicht der Lösung, aufweist, wobei die depolymerisierte carboxylierte Cellulose ein Molekulargewicht zwischen 10.000 und 40.000 g/mol aufweist.

## Claims

1. Use of a solution of depolymerized carboxylated cellulose for grinding and/or dispersing aqueous suspensions of mineral material, said solution of depolymerized carboxylated cellulose having a solids content between 25 and 40% by weight relative to the total weight of the solution, and said depolymerized carboxylated cellulose having a molecular weight between 10,000 and 40,000 g/mol.

2. Use according to claim 1, **characterized in that** said carboxylated cellulose is carboxymethylcellulose.

3. Use according to claim 1, **characterized in that** said depolymerized carboxylated cellulose has a polydispersity index PI between 2 and 10.

4. Use according to one of the preceding claims, **characterized in that** said depolymerized carboxylated cellulose is partially or completely neutralized by means of one or more neutralizing agents selected from the group consisting of sodium hydroxides, calcium hydroxides, magnesium hydroxides, potassium hydroxides and amines.

5. Use according to one of the preceding claims, **characterized in that** said solution of depolymerized carboxylated cellulose is obtained by a method comprising:
1) a depolymerization step according to which:
1a) a carboxylated cellulose to be depolymerized is provided, having a degree of substitution between 0.2 and 2,
1b) a reactor containing water is heated to a temperature between 50 and 85°C (inclusive),
1c) the carboxylated cellulose to be depolymerized and a peroxide are added to the reactor gradually and simultaneously, maintaining the temperature according to 1b),
1d) after adding all the reactants according to 1c), the temperature of the mixture is maintained according to 1b) until there is complete consumption of the peroxide,
2) a step of cooling the mixture to a temperature below 75°C, for example to a temperature below 70°C,
3) optionally a step of neutralization of the mixture.

6. Use according to one of the preceding claims, **characterized in that** said mineral material is selected from the group consisting of natural calcium carbonate, synthetic calcium carbonate, dolomites, kaolin, talc, gypsum, lime, magnesia, titanium dioxide, satin white, aluminum trioxide, aluminum trihydroxide, silicas, mica and mixtures thereof.

7. Use according to one of the preceding claims, **characterized in that** said solution of depolymerized cellulose is present in the aqueous suspension of mineral material in an amount from 0.01 to 8% by weight, based on the total weight of the solids in the suspension.

8. Use according to one of the preceding claims, for grinding and/or dispersing aqueous suspensions of calcium carbonate having a granulometric distribution such that at least 60% by weight of the particles have an equivalent diameter less than or equal to 2 µm.

9. Use according to one of the preceding claims, **characterized in that** said aqueous suspension has a Brookfield viscosity below 1,000 mPa.s, as measured just after grinding with a viscosimeter of the Brookfield DVIII type at 25°C and a speed of 100 rev/min.

10. Use according to one of the preceding claims, **characterized in that** said aqueous suspension is intended for a paint formulation, a plastic formulation, a detergent formulation, a cosmetic formulation, a paper formulation or a paper coating colour.

11. Grinding aid agent or dispersing agent for mineral material, consisting of a solution of depolymerized carboxylated cellulose having a solids content between 25 and 40% by weight relative to the total weight of the solution, said depolymerized carboxylated cellulose having a molecular weight between 10,000 and 40,000 g/mol.
